(19) Europäisches Patentamt / European Patent Office / Office européen des brevets

(11) **EP 2 469 306 A2**

(12) **DEMANDE DE BREVET EUROPEEN**

(43) Date de publication:
**27.06.2012 Bulletin 2012/26**

(51) Int Cl.:
***G01V 1/30*** *(2006.01)*

(21) Numéro de dépôt: **11290578.1**

(22) Date de dépôt: **14.12.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **23.12.2010 FR 1005060**

(71) Demandeur: **IFP Energies nouvelles**
**92852 Rueil-Malmaison Cedex (FR)**

(72) Inventeurs:
• **Dubos-Sallee, Noalwenn**
**75014 Paris (FR)**
• **Rasolofosaon, Patrick**
**91490 Les Ulis (FR)**

(54) **Procédé pour localiser des barrières hydrauliques au sein d'une couche géologique de stockage de gaz**

(57)    - Procédé pour localiser des zones argileuses présentes dans une couche géologique dans laquelle un gaz a été injecté, à partir de données sismiques.
- A partir d'une discrétisation de la couche en un ensemble de mailles, on identifie un premier ensemble de mailles contenant du $CO_2$ au moyen d'une analyse des données sismiques et d'un premier critère. On identifie un second ensemble de mailles contenant de l'argile au moyen d'une analyse des données sismiques et d'un second critère. Puis, on détermine le nombre de mailles identifiées contenant à la fois du $CO_2$ et de l'argile, à partir des ensembles de mailles identifiées. Enfin, on réitère le procédé, en modifiant au moins un des critères, jusqu'à ce que le nombre de mailles soit inférieur à un seuil $\varepsilon_{wi}$ choisi.

**Fig. 7A**

**Fig. 7BA**

**Fig. 7C**

## Description

L'invention concerne le domaine technique du stockage géologique de gaz à effet de serre, tel que le dioxyde de carbone ($CO_2$), et plus particulièrement la construction du modèle géologique statique de la couche du sous-sol qui sert de stockage géologique de ce gaz, afin de réaliser des modélisations numériques d'écoulement pour prédire le devenir du gaz injecté.

La présente invention propose un procédé, basé sur l'analyse de données sismiques, permettant la localisation de zones argileuses sub-sismiques potentiellement présentes dans la couche géologique servant de stockage.

Les scénarios établis par le GIEC (Groupe d'experts Intergouvernemental sur l'Évolution du Climat) montrent que la concentration en $CO_2$ dans l'atmosphère, en l'absence de toute mesure corrective, évoluera d'une concentration actuelle de 360 ppm à plus de 1000 ppm à la fin du XXIème siècle avec des conséquences importantes sur le changement climatique. La capture des émissions de $CO_2$ sur les sources à fort débit (ex : centrales thermiques), le transport de ce $CO_2$ et son stockage dans des formations souterraines appropriées est une des solutions parmi d'autres pour réduire les émissions de gaz à effet de serre. Des projets pilotes de stockage géologique de $CO_2$ existent d'ores et déjà, mais la poursuite du déploiement de cette technologie nécessite des technologies de grande qualité pour répondre aux exigences des réglementations en cours de mise en place ainsi que pour répondre aux attentes du public.

Les aquifères salins profonds présentent le plus fort potentiel pour le stockage géologique de $CO_2$ parmi toutes les formations géologiques envisagées de part leur répartition géographique et leur capacité de stockage théorique.

Le volume du $CO_2$ injecté dans une formation géologique souterraine est facilement connu par mesure du débit de gaz en tête de puits. Toutefois, le devenir du $CO_2$ une fois injecté est beaucoup plus difficile à maîtriser : le $CO_2$ peut migrer verticalement hors de la formation de stockage (dans des couches géologiques plus superficielles, voire jusqu'en surface) ou latéralement dans la formation hôte dans des zones non prévues initialement. De plus, le $CO_2$ peut connaître des modifications physico-chimiques au cours du temps susceptibles de lui faire prendre des formes différentes parmi lesquelles : la forme libre (gazeuse ou supercritique), la forme dissoute dans la saumure ou encore par exemple une forme minéralisée.

Ainsi, un suivi le plus complet possible du devenir du $CO_2$ injecté doit être réalisé pour être conforme aux réglementations en vigueur, ainsi que pour aider à l'acceptation sociétale de cette technologie. Ce suivi complet doit impliquer (i) la réalisation de mesures répétées dans le temps de paramètres physico-chimiques pertinents (monitoring physique, géophysique et géochimique) et (ii) la modélisation numérique du comportement à moyen-terme et à long-terme du $CO_2$ injecté dans le stockage. La qualité de cette modélisation dépend entre autres (i) de la possibilité de disposer d'un modèle géologique statique de la couche de la sub-surface précis et (ii) de la possibilité de mettre à jour la modélisation numérique via la contrainte amenée par les mesures répétées réalisées sur le stockage.

Parmi les techniques de suivi des fluides produits ou injectés au sein d'un milieu poreux, les méthodes géophysiques répétitives, et plus particulièrement la sismique répétitive, ont été développées par les industriels. Ainsi la sismique répétitive, encore appelée sismique 4D, couramment utilisée dans l'industrie (pétrolière ou environnementale) consiste à réaliser différentes campagnes sismiques, à des moments différents (en général les campagnes sont espacées d'au moins une année) et permet de suivre l'évolution des fluides du réservoir en production ou du site géologique de stockage.

Conventionnellement, les données sismiques estimées (vitesses ou impédances) à partir des données acquises permettent de remonter aux propriétés élastiques des fluides produits ou injectés à travers un modèle théorique, en général de type poroélastique (Biot-Gassmann). Ainsi toutes ces techniques ont été exploitées dans le domaine environnemental pour estimer, à partir des données sismiques, le volume total et la masse totale de $CO_2$ en place dans le sous-sol.

Ces méthodes conventionnelles reposent sur l'utilisation d'un modèle élastique du milieu poreux, dont l'estimation des paramètres clés (modules d'incompressibilité et de cisaillement drainés notamment, et compressibilités du grain dans une moindre mesure) est toujours problématique. De plus, elles reposent sur la nécessité de disposer d'au moins un puits, et de faires des essais de puits, dans la zone à évaluer.

De plus, ces méthodes ne permettent pas d'obtenir une précision suffisante pour identifier des zones argileuses au sein de la couche géologique de stockage et loin de puits d'injection ou de production. Or, ces zones constituent des barrières imperméables au $CO_2$. Elles conditionnent donc la connectivité ou non de certaines zones de la couche géologique de stockage. Or, la connaissance de cette connectivité permet de déterminer le volume potentiellement injectable dans la couche, et permet de s'assurer de l'intégrité du site. La localisation des barrières argileuses subsismiques permettrait de mieux définir le modèle statique nécessaire à toute simulation dynamique d'écoulement.

Ainsi, l'objet de l'invention concerne un procédé pour localiser des zones argileuses présentes dans une couche géologique dans laquelle un gaz a été injecté, à partir de données sismiques. Le procédé permet de s'abstraire de la présence de puits, et donc d'essais de puits, dans la zone à évaluer, et de localiser précisément les zones argileuses et leurs bases, formant des barrières hydrauliques, et les éventuelles connexions entre les différents compartiments du réservoir, non seulement au niveau du panache de $CO_2$ mais également dans toute la couche géologique loin de la zone d'injection.

**Le procédé selon l'invention**

De façon générale, l'invention concerne un procédé pour localiser des zones argileuses présentes dans une couche géologique dans laquelle du $CO_2$ a été injecté, à partir de données sismiques et d'une discrétisation de la couche en un ensemble de maille. Le procédé comporte les étapes suivantes :

a. on identifie un premier ensemble de mailles (PL) contenant du $CO_2$ au moyen d'une analyse desdites données sismiques et d'un premier critère ;

b. on identifie un second ensemble de mailles (SH) contenant de l'argile au moyen d'une analyse desdites données sismiques et d'un second critère ;

c. on détermine un nombre de mailles identifiées contenant à la fois du $CO_2$ et de l'argile, à partir desdits ensembles de mailles (PL, SH) ;

d. on réitère à l'étape a) en modifiant au moins un desdits critères, jusqu'à ce que ledit nombre de mailles soit inférieur à un seuil $\varepsilon_{wi}$ choisi.

Pour déterminer le premier ensemble de mailles (PL) contenant du $CO_2$, on peut appliquer les étapes suivantes :

-   on associe à chaque maille des valeurs d'impédances sismiques en onde P avant et après injection de $CO_2$ et des valeurs d'impédances sismiques en onde S avant et après injection de $CO_2$, au moyen d'une inversion stratigraphique des données sismiques ;

-   on associe à chaque maille une valeur de variation de module d'incompressibilité à partir desdites valeurs d'impédances sismiques en onde P et en onde S avant et après injection de $CO_2$ ;

-   on détermine le premier ensemble de mailles (PL) contenant du $CO_2$, en identifiant des mailles où ladite variation de module d'incompressibilité est négative et de valeur absolue supérieure à un premier seuil positif donné $\varepsilon_{pl}$.

Pour déterminer le second ensemble de mailles (SH) contenant de l'argile, on peut appliquer les étapes suivantes :

-   on associe à chaque maille une valeur d'impédance sismique en onde P avant ou après injection de $CO_2$ et une valeur d'impédance sismique en onde S avant ou après injection de $CO_2$, au moyen d'une inversion stratigraphique des données sismiques;

-   on associe à chaque maille une valeur d'un rapport d'impédance sismique en onde P sur l'impédance sismique en onde S ;

-   on détermine le second ensemble de mailles (SH) contenant de l'argile, en identifiant des mailles où ledit rapport est supérieur à un second seuil positif donné $\varepsilon_{sh}$.

Selon l'invention, on peut modifier au moins l'un desdits seuils à chaque itération de l'étape d, de façon à minimiser le nombre de mailles identifiées contenant à la fois du $CO_2$ et de l'argile.
Selon un mode de réalisation, on localise des bases des zones argileuses (SHB) au moyen des étapes suivantes :

-   on associe à chaque maille une valeur de gradient vertical de répartition des zones argileuses (VGSH), à partir dudit second ensemble de mailles (SH) ;

-   on localise les bases (SHB) des zones argileuses à partir desdites valeurs de gradient vertical de répartition des argiles (VGSH).

Selon ce mode de réalisation, on peut effectuer un contrôle de qualité de la localisation de la base (SHB) des zones argileuses en vérifiant une cohérence entre des connexions entre différentes mailles contenant du $CO_2$ et des

discontinuités entre les bases des zones argileuses ainsi localisée. On peut également effectuer ce contrôle de qualité de la localisation de la base (SHB) des zones argileuses au moyen de diagraphies à rayons $\gamma$ réalisées au niveau d'un puits traversant ladite couche géologique. On peut également réitérer le procédé en modifiant au moins l'un desdits seuils lorsque le contrôle de qualité est négatif.

Enfin, l'invention concerne également un procédé de surveillance d'un site de stockage géologique de $CO_2$, dans lequel on localise des zones argileuses présentes dans une couche géologique dans laquelle le $CO_2$ est injecté, au moyen du procédé selon l'invention. On peut également, dans le cadre d'un procédé de surveillance d'un site de stockage géologique de $CO_2$, localiser des barrières hydrauliques dans l'ensemble de la couche géologique couverte par les données sismiques et dans laquelle le $CO_2$ est injecté, au moyen du mode de réalisation particulier du procédé selon l'invention.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

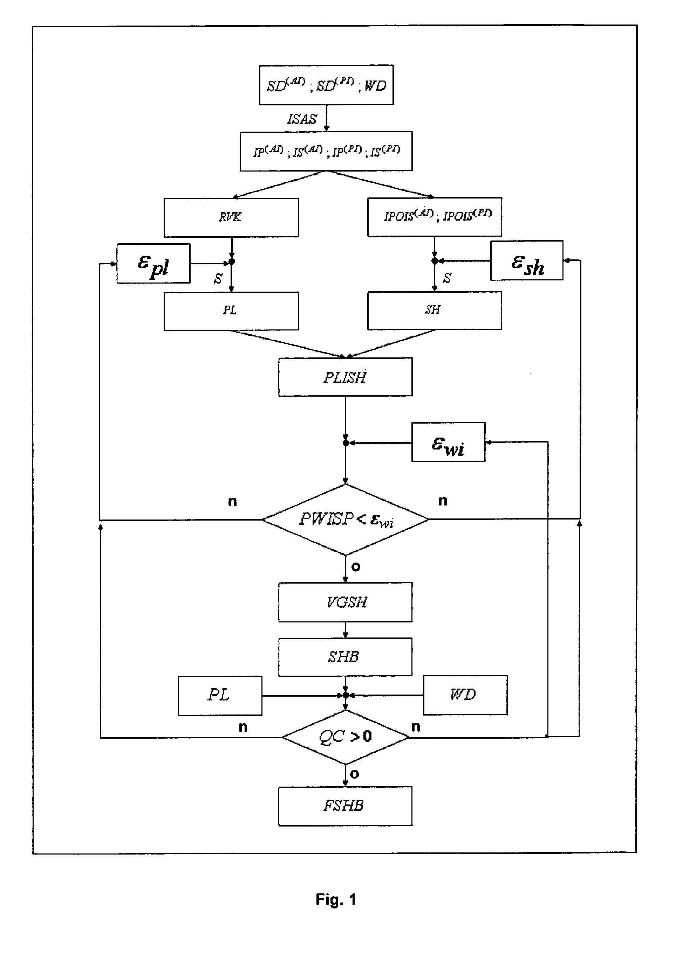

- La figure 1 illustre les étapes du procédé selon l'invention.

- La figure 2 illustre les relations entre l'impédance Ip et le rapport Ip/Is pour différentes lithologies.

- La figure 3 illustre trois coupes verticales d'un cube binaire (*SH*) de répartition des argiles pour trois critères $\varepsilon_{sh}$ différents.

- La figure 4 illustre trois coupes verticales d'un cube binaire (*PLISH*) d'intersection entre le panache de $CO_2$ et la lithologie argileuse (figure 3) pour trois critères $\varepsilon_{sh}$ différents.

- La figure 5 illustre une coupe verticale du cube *VGSH* montrant le toit et la base (à gauche) et uniquement la base (à droite) des argiles.

- La figure 6 illustre une coupe verticale du cube final *FSHB* de la base des argiles au niveau d'un puits, permettant de comparer les lithologies argileuses déduites des diagraphies à rayons $\gamma$ et la base des argiles déduites de la sismique.

- La figure 7A montre une coupe verticale du cube binaire *SHB* de répartition de la base des argiles calculé à partir du modèle a priori.

- La figure 7B montre une coupe verticale du cube binaire *PL* de répartition du panache de $CO_2$.

- La figure 7C montre une coupe verticale du cube binaire *FSHB* de répartition de la base des argiles calculé à partir modèle inversé (issu de l'inversion stratigraphique).

**Description détaillée du procédé**

Le procédé selon l'invention permet de localiser des zones argileuses présentes dans une couche géologique dans laquelle un gaz a été injecté.

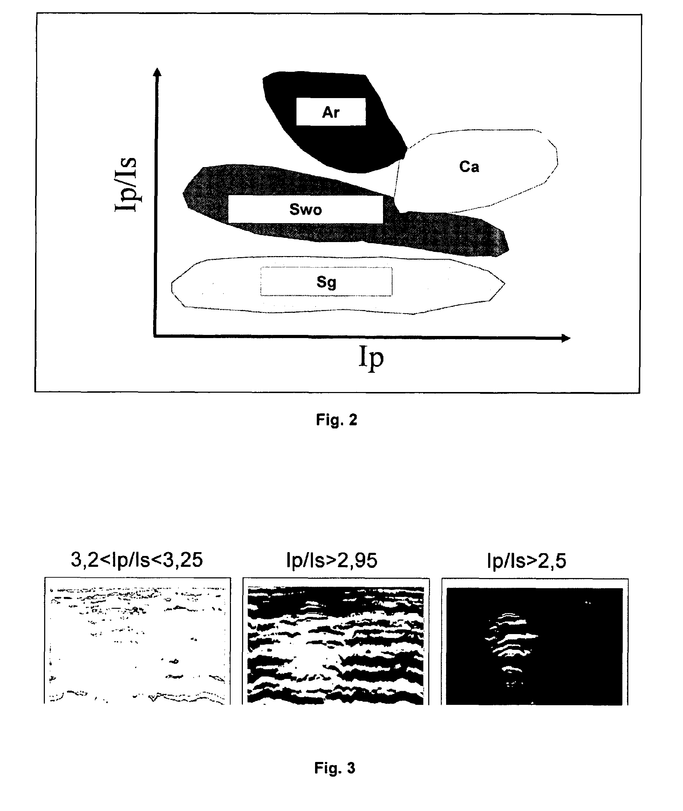

On entend par zone argileuse, une zone dont le rapport d'impédance sismique en onde P (Ip) sur l'impédance sismique en onde S (Is) est supérieur au rapport de ces impédances dans la couche de stockage du gaz. La figure 2 illustre les relations entre l'impédance Ip et le rapport Ip/Is pour différentes lithologies : Ar (argile), Ca (calcaire), Swp (sables à eau/huile) et Sg (sables à gaz). Cette figure montre le caractère sélectif du rapport Ip/Is vis-à-vis des lithologies argileuses et sableuses.

A partir de données sismiques et d'une discrétisation de la couche en un ensemble de mailles (cube), le procédé comporte les étapes suivantes :

a. on identifie un premier ensemble de mailles (PL) contenant du $CO_2$ en analysant les données sismiques et en appliquant un premier critère ;

b. on identifie un second ensemble de mailles (SH) contenant de l'argile en analysant les données sismiques et en appliquant un second critère ;

c. on détermine le nombre de mailles identifiées comme contenant à la fois du $CO_2$ et de l'argile, à partir des ensembles de mailles (PL, SH) ;

d. on réitère à l'étape a) en modifiant au moins un des critères, jusqu'à ce que ce nombre de mailles soit inférieur à un seuil $\varepsilon_{wi}$ choisi.

Le procédé est décrit dans le cadre de l'injection de $CO_2$ dans une couche géologique (aquifère) contenant des zones argileuses, telles que des lentilles d'argile. Il comporte les étapes suivantes :

1. Acquisition de données et injection de $CO_2$

2. Localisation du panache de $CO_2$

- Détermination des impédances sismiques (ou vitesses des ondes sismiques)

- Construction de cubes de variation du module d'incompressibilité

- Localisation du panache de $CO_2$

3. Localisation des zones argileuses

1. Acquisition de données et injection de $CO_2$

En premier lieu, on acquiert un premier jeu de données sismiques 3D, avant l'injection (AI) de $CO_2$ dans l'aquifère. Ce premier jeu permet d'imager une zone du sous-sol contenant l'aquifère d'injection. Ce jeu est noté $SD^{(AI)}$. Ces données constituent un premier cube d'amplitude sismique.
On réalise une injection de $CO_2$ dans l'aquifère.
On acquiert ensuite un second jeu de données sismiques 3D (donc après l'injection (PI) de $CO_2$). Ce second jeu permet d'imager la même zone du sous-sol que celle imagée par le premier jeu de données. Ce jeu est noté $SD^{(PI)}$. Ces données constituent un second cube d'amplitude sismique.
On dispose ainsi de deux images d'une zone du sous-sol contenant l'aquifère d'injection. De façon connue des spécialistes, qui connaissent les méthodes de sismiques 4D, le dispositif d'acquisition de ces données sismiques doit être sensiblement le même, de façon à obtenir des images comparables.
On peut également acquérir, en vue d'une inversion stratigraphique, des données de puits, notées WD. Ces données comprennent des diagraphies (logs de puits) de densité, des diagraphies de vitesses d'ondes sismiques P et S et des diagraphies à rayons γ.

2. Localisation du panache de $CO_2$

La localisation du panache de $CO_2$ au sein du sous-sol repose sur la connaissance de la variation relative du module d'incompressibilité des formations géologiques du sous-sol envahie par le $CO_2$.
Le module d'incompressibilité, noté K, d'une roche est le coefficient de proportionnalité entre la pression de confinement isotrope exercée sur un échantillon de cette roche et la variation relative de volume (ou déformation volumique) de cet échantillon résultant de cette mise en pression.
La détermination de ces cubes de variation au sein du sous-sol se base uniquement sur les impédances sismiques issues directement des données sismiques. De façon générale, on réalise les étapes suivantes :

- on associe à chaque maille des valeurs d'impédances sismiques en onde P avant et après injection de $CO_2$ et des valeurs d'impédances sismiques en onde S avant et après injection de $CO_2$, au moyen d'une inversion stratigraphique des données sismiques ;

- on associe à chaque maille une valeur de variation de module d'incompressibilité à partir des valeurs d'impédances sismiques en onde P et en onde S avant et après injection de $CO_2$ ;

- on détermine le premier ensemble de mailles (PL) contenant du $CO_2$, en identifiant des mailles où la variation de module d'incompressibilité est négative et de valeur absolue supérieure à un premier seuil positif donné $\varepsilon_{pl}$.

Ce procédé est décrit en détail ci-après.

2.1 Détermination des impédances sismiques (ou vitesses des ondes sismiques)

La détermination des impédances sismiques se base sur une inversion stratigraphique des cubes de données sismiques 4D. Une telle technique est bien connue des spécialistes.

Selon un mode de réalisation, on transforme les deux cubes d'amplitudes sismiques en impédances sismiques (ou en vitesses sismiques), au moyen d'une inversion stratigraphique avant sommation (*ISAS*).

Les données de puits *WD* permettent la construction et le calage d'un modèle a priori, souvent utilisé dans les techniques d'inversion stratigraphique.

Les données obtenues après inversion sont les cubes d'impédance en onde P et en onde S, respectivement notées $IP^{(AI)}$ et $IS^{(AI)}$ pour les données avant injection, et $IP^{(PI)}$ et $IS^{(PI)}$ pour les données après injection.

Toutes les données utilisées sont des cubes de données à trois dimensions. Les deux premières dimensions sont des directions géographiques horizontales $x$ et $y$, et la troisième dimension "verticale" est le temps $t$ d'enregistrement sismique. Ces cubes constituent ainsi une discrétisation du sous-sol en un ensemble de mailles. A chaque cellule est associée une valeur d'une propriété en fonction du cube : les mailles du cube d'impédance en onde P, contiennent une valeur d'impédance en onde P.

Pour une même profondeur, le temps d'enregistrement d'un jeu de données sismiques acquis à un instant donné n'est pas le même que le temps d'enregistrement d'un second jeu de données sismiques acquis ultérieurement car les vitesses de propagation des ondes sismiques dans la roche sont modifiées par la substitution de la saumure par le $CO_2$. On parle d'échelles de temps différentes.

Ainsi, les échelles de temps sont différentes pour les données d'impédance avant et après injection.

De façon connue des spécialistes, l'interprétation de données sismiques 4D comporte une étape de mise en correspondance des temps de propagation des deux jeux de données sismiques, avant et après injection. Une telle technique est communément appelée "*warping*" (*W*). Un exemple est décrit dans le document suivant :

DeVault B., et al., 2007, "Prestack 9-C joint inversion for stratigraphic prediction in the Williston Basin". 77th SEG Annual International Meeting, Expanded Abstracts, 1039-1043

Ainsi, les données en impédance après injection, $IP^{(PI)}$ et $IS^{(PI)}$, sont mises en correspondance temporelle avec les données avant injection, $IP^{(AI)}$ et $IS^{(AI)}$ pour permettre leur comparaison quantitative. Les données en sortie sont les données sismiques en impédance après "warping" en onde P et en onde S, respectivement notées $WIP^{(PI)}$ et $WIS^{(PI)}$, exprimées dans le même repère temporel que les données d'impédance avant injection.

2.2 Construction de cubes de variation du module d'incompressibilité

Dans un premier temps, on transforme les données d'impédance en cubes du produit module d'incompressibilité $K$ par la masse volumique $\rho$ du sous-sol. Ces cubes sont notés $KR^{(AI)}$, pour le cube avant injection, et $KR^{(PI)}$ pour le cube après injection.

Pour réaliser ces transformations, on utilise les formules suivantes :

$$(1) \qquad KR^{(AI)}(x, y, t) = \left(IP^{(AI)}(x, y, t)\right)^2 - \frac{4}{3}\left(IS^{(AI)}(x, y, t)\right)^2$$

avant injection, et

$$(2) \qquad KR^{(PI)}(x, y, t) = \left(WIP^{(PI)}(x, y, t)\right)^2 - \frac{4}{3}\left(WIS^{(PI)}(x, y, t)\right)^2$$

après injection.

Ces équations viennent du fait que les vitesses des ondes sismiques P, $V_p$, et des ondes S, $V_S$, ainsi que les impédances associées $I_P$ et $I_S$ respectent les équations suivantes :

$$\rho V_P^2 = K + \frac{4}{3}\mu \quad ; \quad \rho V_S^2 = \mu \quad ; \quad I_P = \rho V_P$$

et

$$I_S = \rho V_S$$

On en déduit les formules suivantes : $: K\rho = I_P^2 - \left(4/3\right)I_S^2 \;$ et $\; \mu\rho = I_S^2$

Les cubes des variations relatives des produits $K.\rho$ et $\mu.\rho$, du fait de l'injection de $CO_2$, sont notés respectivement *RVKR* et *RVMR*. Ils sont déduits des formules suivantes:

$$(5) \quad RVKR(x,y,t) = \frac{KR^{(PI)}(x,y,t) - KR^{(AI)}(x,y,t)}{KR^{(AI)}(x,y,t)} \quad ,$$

et

$$(6) \quad RVMR(x,y,t) = \frac{MR^{(PI)}(x,y,t) - MR^{(AI)}(x,y,t)}{MR^{(AI)}(x,y,t)}$$

En négligeant les effets de pression et les variations du module de cisaillement $\mu$ dus à la substitution de la saumure par le $CO_2$, les cubes de variation relative de la masse volumique, noté *RVR*, et de variation relative du module d'incompressibilité, noté *RVK*, sont obtenus par les formules suivantes:

$$(7) \quad RVR(x,y,t) = RVMR(x,y,t) ,$$

et

$$(8) \quad RVK(x,y,t) = RVKR(x,y,t) - RVMR(x,y,t)$$

2.3 Localisation du panache de $CO_2$

Le $CO_2$ ayant un module d'incompressibilité et une masse volumique plus faible que la saumure, la substitution de la saumure par le $CO_2$ tend à faire diminuer la masse volumique et le module d'incompressibilité effectif de la roche dans la zone d'injection. Les zones de diminution de la masse volumique $\rho$ du sous-sol, sont repérées en calculant le cube filtré des variations relatives de densité, noté *RVRF* et défini par:

$$(9) \quad RVRF(x,y,t) = \begin{cases} 1 & si & RVR(x,y,t) < 0 \\ 0 & si & RVR(x,y,t) > 0 \end{cases}$$

De même, les zones de diminution du module d'incompressibilité $K$ du sous-sol, sont repérées en calculant le cube filtré des variations relatives du module d'incompressibilité, noté $RVKF$ et défini par:

$$(10) \quad RVKF(x,y,t) = \begin{cases} 1 & si & RVK(x,y,t) < 0 \\ 0 & si & RVK(x,y,t) > 0 \end{cases}$$

Par ailleurs, de nombreuses sources de bruits, liées essentiellement à l'acquisition, font que cette diminution du module d'incompressibilité n'est cohérente spatialement qu'au dessus d'un certain seuil $\varepsilon_{pl}$ des variations relatives du module d'incompressibilité. Les zones de diminution suffisante du module d'incompressibilité $K$ du sous-sol, sont repérées en calculant le cube seuillé des variations relatives du module d'incompressibilité, noté $PL$, et défini par:

$$(11) \quad PL(x,y,t) = \begin{cases} 1 & si & |RVK(x,y,t)| > \varepsilon_{pl} \\ 0 & si & |RVK(x,y,t)| < \varepsilon_{pl} \end{cases}$$

3. Localisation des zones argileuses

3.1 Localisation initiale des zones argileuses

On calcule les cubes $IPOIS^{(AI)}$ et $IPOIS^{(PI)}$ des rapports d'impédances de l'onde P et de l'onde S, avant et après injection, par les formules suivantes:

$$(2) \quad IPOIS^{(AI)}(x,y,t) = \frac{IP^{(AI)}(x,y,t)}{IS^{(AI)}(x,y,t)},$$

et

$$(3) \quad IPOIS^{(PI)}(x,y,t) = \frac{IP^{(PI)}(x,y,t)}{IS^{(PI)}(x,y,t)}.$$

Les lithologies argileuses sont très connues pour présenter des rapports d'impédance de l'onde P à l'impédance de l'onde S notablement plus élevées que les roches sédimentaires clastiques (type grès) ou carbonatées (types calcaires ou dolomies). Aussi, au dessus d'un certain seuil $\varepsilon_{sh}$ du rapport d'impédance de l'onde P à l'impédance de l'onde S la lithologie est supposée argileuse. Le cube binaire $SH$ de répartition des argiles est obtenu en seuillant le cube $IPOIS^{(PI)}$ du rapport d'impédance de l'onde P à l'impédance de l'onde S, après injection:

$$(4)\ SH(x,y,t) = \begin{cases} 1 & si & \left| IPOIS^{(PI)}(x,y,t) \right| > \varepsilon_{sh} \\ 0 & si & \left| IPOIS^{(PI)}(x,y,t) \right| < \varepsilon_{sh} \end{cases}$$

Notons que nous pouvons également obtenir un autre cube binaire $SH$ de répartition des argiles en seuillant le cube $IPOIS^{(AI)}$ du rapport d'impédance de l'onde P à l'impédance de l'onde S, avant injection. Toutefois, les contrastes d'impédances entre les argiles et les formations sédimentaires où l'injection est faite sont exacerbés par l'injection de $CO_2$. Aussi il est souvent préférable d'utiliser le cube $IPOIS^{(PI)}$ du rapport d'impédance de l'onde P à l'impédance de l'onde S, après injection. Le même traitement sur le cube $IPOIS^{(AI)}$ avant injection est souvent utile pour contrôler la cohérence des résultats.

La figure 3 illustre trois coupes verticales d'un cube binaire ($SH$) de répartition des argiles pour trois critères $\varepsilon_{sh}$ différents, à savoir, de gauche à droite 3,2<Ip/Is<3,25, Ip/Is>2,95 et Ip/Is>2,5. Les lithologies argileuses sont en noir et les lithologies sableuses en gris clair. Cette figure est obtenue dans le cas d'une injection de $CO_2$ dans un aquifère gréseux. L'échelle verticale totale est d'environ 350m, et l'échelle horizontale totale est d'environ 5,5 km.

3.2 Localisation des zones identifiées comme contenant à la fois de l'argile et du $CO_2$

Le cube binaire $PLISH$ d'intersection entre le panache de $CO_2$ et la lithologie argileuse est obtenu en multipliant le cube binaire $PL$ d'extension du panache de $CO_2$ par le cube binaire $SH$ de répartition des argiles:

$$(5)\ PLISH(x,y,t) = PL(x,y,t) \times SH(x,y,t)$$

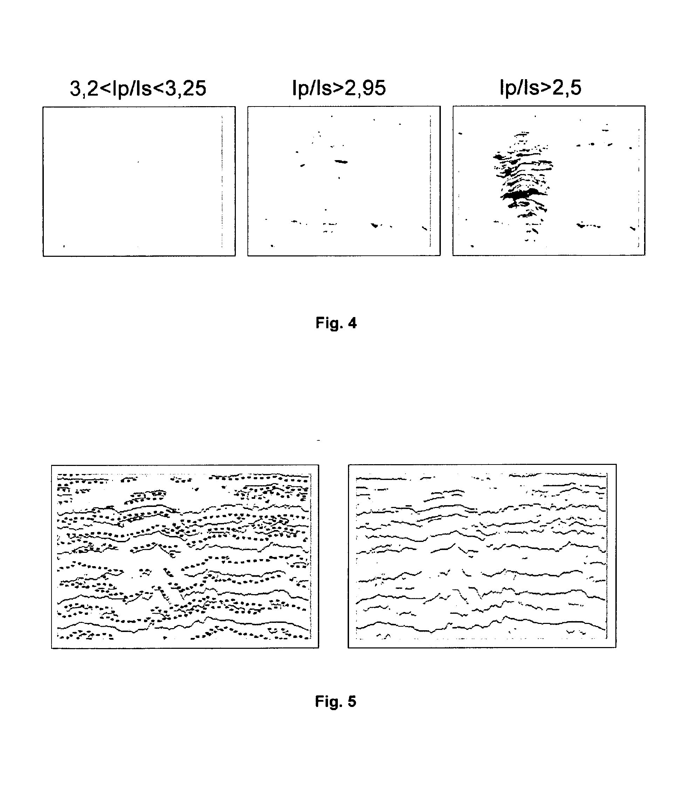

La figure 4 illustre trois coupes verticales d'un cube binaire ($PLISH$) d'intersection entre le panache de $CO_2$ et la lithologie argileuse (figure 3), pour trois critères $\varepsilon_{sh}$ différents (utilisés sur la figure 3). Les zones noires correspondent à l'intersection entre le panache de $CO_2$ et la lithologie argileuse. L'échelle verticale totale est d'environ 350m, et l'échelle horizontale totale est d'environ 5,5 km.

Les argiles étant beaucoup moins perméables que les roches sédimentaires clastiques (type grès) ou carbonatées (types calcaires ou dolomies), le panache de $CO_2$ se développera donc essentiellement dans les lithologies clastiques ou carbonatées. Aussi, en théorie, le panache de $CO_2$ ne devrait pas recouper les lithologies argileuses, ou en d'autres termes le cube binaire $PLISH$ d'intersection entre le panache de $CO_2$ et la lithologie argileuse ne devrait comporter que la valeur 0.

Le nombre de pixel élémentaire en 3D, connu des spécialistes sous le nom voxel (contraction des termes anglais "volumetric pixel"), $NPL$, composant tout le panache de $CO_2$ est donné par la formule:

$$(6)\ NPL = \sum_{x,y,t} PL(x,y,t)$$

où le symbole $\displaystyle\sum_{x,y,t}$ désigne la somme des valeurs contenues dans le cube suivant les dimensions x, y et t, ou tout simplement la somme de toutes les valeurs des éléments du cube considéré. De même, le nombre de voxels $NWI$, dans la couche géologique d'injection, identifiés de manière incorrecte comme de l'argile à l'intérieur du panache de $CO_2$ vaut:

$$(7)\ NWI = \sum_{x,y,t} PLISH(x,y,t)$$

Ainsi la proportion *PWISP* de voxels de la couche géologique d'injection, identifiés de manière incorrecte comme de l'argile, à l'intérieur du panache de $CO_2$ vaut:

$$(8) \quad PWISP = \frac{NWI}{NPL} = \frac{\displaystyle\sum_{x,y,t} PLISH(x,y,t)}{\displaystyle\sum_{x,y,t} PL(x,y,t)}$$

### 3.3 Modification de la localisation des zones argileuses

Nous imposons que *PWISP* soit inférieur à un certain seuil de tolérance $\varepsilon_{wi}$. Si *PWISP* est supérieur à $\varepsilon_{wi}$ il faut réactualiser le seuil $\varepsilon_{sh}$, pour l'identification des argiles, et/ou le seuil $\varepsilon_{pl}$, pour l'estimation de l'extension du panache de $CO_2$, puis reprendre le procédé à partir de l'étape 2 (localisation du panache de $CO_2$).

**Autres modes de réalisation**

Selon un mode de réalisation, on localise, à partir de la localisation des zones argileuses, les barrières hydrauliques présentes dans la couche géologique dans laquelle un gaz a été injecté.

On entend par barrière hydraulique (argileuse), la frontière inférieure (c'est-à-dire la plus profonde) des zones argileuses. Il s'agit donc de la base des zones argileuses. Cette base forme une frontière entre la zone argileuse et la couche poreuse dans lequel est injecté le $CO_2$. Elle constitue une barrière à l'écoulement des fluides, et empêche donc le $CO_2$ de remonter par gravité.

Selon l'invention, on localise les bases des zones argileuses (SHB) au moyen des étapes suivantes :

- on associe à chaque maille une valeur de gradient vertical de répartition des zones argileuses (VGSH), à partir du second ensemble de mailles (le cube SH) ;
- on localise les bases (SHB) des zones argileuses à partir de ces valeurs de gradient vertical de répartition des argiles (VGSH).

Ainsi, si *PWISP* est inférieur à $\varepsilon_{wi}$ le cube *VGSH* du gradient vertical de la répartition des argiles est calculé à partir du cube SH en utilisant la formule suivante:

$$(9) \quad VGSH(x,y,t) = SH(x,y,t+1) - SH(x,y,t)$$

où les éléments $SH(x,y,t+1)$ et $SH(x,y,t)$ désignent deux éléments successifs sur l'axe des temps t du cube *SH*. Le cube *VGSH* ne peut contenir que les valeurs 0, -1 ou 1. La valeur 0 correspond au fait que $SH(x,y,t+1)$ et $SH(x,y,t)$ correspondent à la même lithologie, argile ou non-argile. La valeur -1 correspond au passage de haut en bas d'une lithologie argileuse à une lithologie non-argileuse, et la valeur +1 à l'inverse.

La figure 5 illustre une coupe verticale du cube *VGSH* montrant le toit et la base (à gauche) et uniquement la base (à droite) des argiles, dans le cas d'une injection de $CO_2$ dans un aquifère gréseux. L'échelle verticale totale est d'environ 350m, et l'échelle horizontale totale est d'environ 5,5 km. Les traits en pointillé indiquent le toit des argiles, les traits pleins indiquent la base des argiles.

Enfin le cube binaire *SHB* de répartition de la base des argiles est calculé à partir du cube *VGSH* en utilisant la formule suivante:

$$(10) \quad SHB(x,y,t) = \begin{cases} 1 & si & VGSH(x,y,t) = -1 \\ 0 & si & VGSH(x,y,t) \neq -1 \end{cases}$$

Selon un autre mode de réalisation, on réalise un contrôle de qualité de la localisation de la base (SHB) des zones argileuses.

Le contrôle qualité de la restitution de la base des argiles peut se faire de deux manières. D'une part la confrontation du cube binaire *SHB* de répartition de la base des argiles et du cube binaire *PL* d'extension du panache de $CO_2$ permet de se rendre compte si les connexions entre les différentes couches composant le panache de $CO_2$ correspondent bien à des discontinuités sur la base des argiles, seuls passage possible du $CO_2$ par gravité du bas au haut du réservoir. D'autre part la confrontation du cube binaire *SHB* de répartition de la base des argiles et de la localisation en profondeur au niveau des puits des lithologies argileuses déduites des diagraphies à rayons $\gamma$ permet de vérifier la cohérence du nombre et des profondeurs des bases des couches argileuses déduites des diagraphies et de la sismique.

A partir de ces confrontations, estimer si le cube binaire *SHB* de répartition de la base des argiles est suffisamment en accord avec l'extension du panache de $CO_2$ et les niveaux des lithologies argileuses déduites des diagraphies en ondes $\gamma$ est une affaire de spécialiste interprétateurs géologiques/sismiques.

Si l'accord est insuffisant, c'est-à-dire dans le cas d'un contrôle qualité négatif (i.e. $QC < 0$), il faut réactualiser le seuil de tolérance $\varepsilon_{wi}$ pour la mauvaise identification de la lithologie argileuse au sein du panache de $CO_2$ , puis reprendre le procédé. Si la qualité de la restitution de la base des argiles est encore insuffisante il est également possible de réactualiser le seuil $\varepsilon_{sh}$, pour l'identification des argiles, et le seuil $\varepsilon_{pl}$, pour l'estimation de l'extension du panache de $CO_2$ , puis reprendre le procédé.

Si l'accord est suffisant, c'est-à-dire dans le cas d'un contrôle qualité positif (i.e. $QC > 0$), le cube binaire de répartition de la base des argiles est considéré comme le cube final *FSHB* de répartition de la base des argiles.

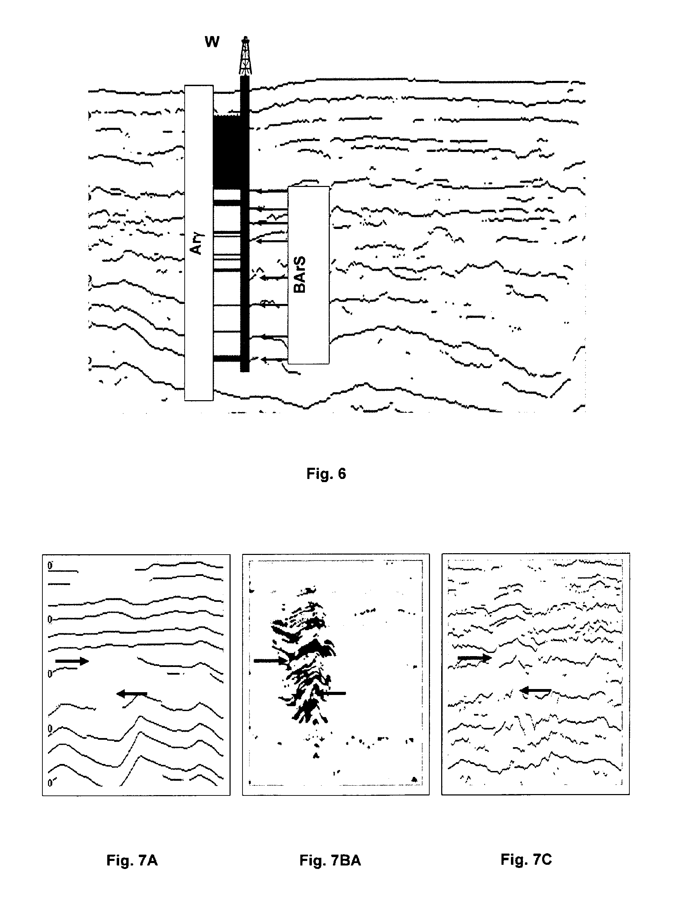

La figure 6 illustre une coupe verticale du cube final FSHB de la base des argiles au niveau d'un puits (W), permettant de comparer les lithologies argileuses (Ar$\gamma$) déduites des diagraphies à rayons $\gamma$ et la base des argiles (ArS) déduites de la sismique. Cette figure est obtenue dans le cas de l'injection de $CO_2$ dans un aquifère gréseux. L'échelle verticale totale est d'environ 350m, et l'échelle horizontale totale est d'environ 5,7 km.

Les figures 7A, 7B et 7C illustrent la capacité du procédé selon l'invention à localiser précisément les éventuelles connexions entre les différents compartiments du réservoir, non seulement au niveau du panache de $CO_2$ mais également dans toute la couche géologique loin de la zone d'injection. La figure 7A montre une coupe verticale du cube binaire *SHB* de répartition de la base des argiles calculé à partir du modèle a priori. La figure 7B montre une coupe verticale du cube binaire *PL* de répartition du panache de $CO_2$ . La figure 7C montre une coupe verticale du cube binaire *FSHB* de répartition de la base des argiles calculé à partir modèle inversé (issu de l'inversion stratigraphique). Sur chacune de ces figures, une flèche indique une connexion entre différentes couches composant le panache de $CO_2$.

On note que les deux connections ne sont pas pré-existantes dans le modèle a priori (figure 7A) mais sont mises en évidence par l'inversion stratigraphique des données sismiques (figure 7C).

L'invention concerne également un procédé de surveillance d'un site de stockage géologique de $CO_2$, dans lequel on localise des zones argileuses présentes dans la couche géologique couverte par les données sismiques et dans laquelle le $CO_2$ est injecté, au moyen du procédé selon l'invention.

On peut également, dans le cadre d'un procédé de surveillance d'un site de stockage géologique de $CO_2$, localiser des barrières hydrauliques dans l'ensemble de la couche géologique couverte par les données sismiques et dans laquelle le $CO_2$ est injecté, au moyen du mode de réalisation particulier du procédé selon l'invention.

La détection précise des zones argileuses et des barrières hydrauliques permet alors d'optimiser l'exploitation du site de stockage, en optimisant l'injection ou la surveillance du site.

**Revendications**

1. Procédé pour localiser des zones argileuses présentes dans une couche géologique dans laquelle du $CO_2$ a été injecté, à partir de données sismiques et d'une discrétisation de ladite couche en un ensemble de mailles, **caractérisé en ce que** l'on réalise les étapes suivantes :

   a. on identifie un premier ensemble de mailles (PL) contenant du $CO_2$ au moyen d'une analyse desdites données sismiques et d'un premier critère ;
   b. on identifie un second ensemble de mailles (SH) contenant de l'argile au moyen d'une analyse desdites données sismiques et d'un second critère ;
   c. on détermine un nombre de mailles identifiées contenant à la fois du $CO_2$ et de l'argile, à partir desdits ensembles de mailles (PL, SH) ;
   d. on réitère à l'étape a) en modifiant au moins un desdits critères, jusqu'à ce que ledit nombre de mailles soit inférieur à un seuil $\varepsilon_{wi}$ choisi.

**2.** Procédé selon la revendication 1, dans lequel on détermine le premier ensemble de mailles (PL) contenant du $CO_2$ au moyen des étapes suivantes :

- on associe à chaque maille des valeurs d'impédances sismiques en onde P avant et après injection de $CO_2$ et des valeurs d'impédances sismiques en onde S avant et après injection de $CO_2$, au moyen d'une inversion stratigraphique des données sismiques ;
- on associe à chaque maille une valeur de variation de module d'incompressibilité à partir desdites valeurs d'impédances sismiques en onde P et en onde S avant et après injection de $CO_2$ ;
- on détermine le premier ensemble de mailles (PL) contenant du $CO_2$, en identifiant des mailles où ladite variation de module d'incompressibilité est négative et de valeur absolue supérieure à un premier seuil positif donné $\varepsilon_{pl}$.

**3.** Procédé selon l'une des revendications précédentes, dans lequel on détermine le second ensemble de mailles (SH) contenant de l'argile au moyen des étapes suivantes :

- on associe à chaque maille une valeur d'impédance sismique en onde P avant ou après injection de $CO_2$ et une valeur d'impédance sismique en onde S avant ou après injection de $CO_2$, au moyen d'une inversion stratigraphique des données sismiques;
- on associe à chaque maille une valeur d'un rapport d'impédance sismique en onde P sur l'impédance sismique en onde S ;
- on détermine le second ensemble de mailles (SH) contenant de l'argile, en identifiant des mailles où ledit rapport est supérieur à un second seuil positif donné $\varepsilon_{sh}$.

**4.** Procédé selon l'une des revendications 2 et 3, dans lequel on modifie au moins l'un desdits seuils à chaque itération de l'étape d.

**5.** Procédé selon l'une des revendications précédentes, dans lequel on localise des bases des zones argileuses (SHB) au moyen des étapes suivantes :

- on associe à chaque maille une valeur de gradient vertical de répartition des zones argileuses (VGSH), à partir dudit second ensemble de mailles (SH) ;
- on localise les bases (SHB) des zones argileuses à partir desdites valeurs de gradient vertical de répartition des argiles (VGSH).

**6.** Procédé selon la revendication 5, dans lequel on réalise un contrôle de qualité de la localisation de la base (SHB) des zones argileuses en vérifiant une cohérence entre des connexions entre différentes mailles contenant du $CO_2$ et des discontinuités entre les bases des zones argileuses ainsi localisée.

**7.** Procédé selon la revendication 5, dans lequel on réalise un contrôle de qualité de la localisation de la base (SHB) des zones argileuses au moyen de diagraphies à rayons $\gamma$ réalisées au niveau d'un puits traversant ladite couche géologique.

**8.** Procédé selon l'une des revendications 6 ou 7, dans lequel on réitère le procédé en modifiant au moins l'un desdits seuils lorsque ledit contrôle de qualité est négatif.

**9.** Procédé de surveillance d'un site de stockage géologique de $CO_2$, dans lequel on localise des zones argileuses présentes dans une couche géologique dans laquelle le $CO_2$ est injecté, au moyen du procédé pour localiser des zones argileuses selon l'une des revendications 1 à 8.

**10.** Procédé de surveillance d'un site de stockage géologique de $CO_2$, dans lequel on localise des barrières hydrauliques dans l'ensemble de la couche géologique couverte par les données sismiques et dans laquelle le $CO_2$ est injecté, au moyen du procédé pour localiser des zones argileuses selon l'une des revendications 5 à 8.

**Fig. 1**

Fig. 2

3,2<Ip/Is<3,25     Ip/Is>2,95     Ip/Is>2,5

Fig. 3

3,2<Ip/Is<3,25            Ip/Is>2,95            Ip/Is>2,5

Fig. 4

Fig. 5

**Fig. 6**

**Fig. 7A**  **Fig. 7BA**  **Fig. 7C**